# EUROPEAN PATENT SPECIFICATION

(11) **EP 4 474 232 B1**
(45) Date of publication and mention of the grant of the patent: **27.08.2025**
(21) Application number: 23704419.3
(22) Date of filing: 20.01.2023
(51) Int. Cl.: B60T 7/08, B60T 7/10, B60T 8/40, B60T 17/22, B60T 8/17, B60T 8/26, B60T 8/32, B62L 3/02

(54) **HYDRAULIC PRESSURE CONTROL UNIT**
HYDRAULISCHE DRUCKSTEUEREINHEIT
UNITÉ DE COMMANDE DE PRESSION HYDRAULIQUE

(30) Priority: 31.01.2022 JP 2022012704
(43) Date of publication of application: 11.12.2024
(73) Proprietor: Robert Bosch GmbH, 70442 Stuttgart (DE)
(72) Inventor: KOMURA, Taro, Yokohama-shi, Kanagawa 224-8501 (JP)
(86) International application number: PCT/IB2023/050481
(87) International publication number: WO 2023/144669

(56) References cited:
- WO-A1-2021/038377
- DE-A1- 102020 214 528
- JP-A- 2021 133 808

## Description

### Technical Field

The present invention relates to a hydraulic pressure control unit capable of suppressing enlargement of the hydraulic pressure control unit.

### Background Art

A straddle-type vehicle is provided with a hydraulic pressure control unit for controlling a braking force that is generated on a wheel (for example, see PTL 1). In the hydraulic pressure control unit, a hydraulic pressure of a brake fluid is controlled by a hydraulic pressure control mechanism such as a valve. Operation of the hydraulic pressure control mechanism is controlled by a control board of the hydraulic pressure control unit. WO 2021/038377 A1 discloses a hydraulic control unit that can resist an external force more than in the past when mounted on a saddle-type vehicle. A hydraulic control unit comprises: a base in which is formed an internal flow channel in which brake fluid flows, a retraction valve and a relaxation valve that open and close the internal flow channel during anti-lock brake control, a first coil serving as a drive source for the retraction valve, a second coil serving as a drive source for the relaxation valve, and a circuit board that is electrically connected to the first coil and the second coil, and that controls energization of the first coil and the second coil. The base is held by a front fork. When a saddle-type vehicle in which the hydraulic control unit is installed is viewed from the front, the circuit board is located behind the front fork and the base, and the first coil and the second coil are erected from a rear surface of the base. JP2021 133808 A discloses a brake fluid pressure control device which can inhibit an increase of manufacturing costs compared to a conventional brake fluid pressure control device which uses a coil spring to ground a control board. A brake fluid pressure control device includes a metallic substrate formed with a passage of a brake fluid, and a control board of a brake fluid pressure control mechanism provided in the passage. Further, the brake fluid pressure control device according to the invention includes at least one conductive plate spring provided between the control board and a component electrically connected to the substrate. Each plate spring has a free length longer than a distance between the control board and the component and is connected at a first end part to the control board and at a second end part to the component.

### Citation List

### Patent Literature

PTL 1: JP2018-8674A

### Summary of Invention

### Technical Problem

By the way, there is a need to suppress electrostatic discharge (ESD), which causes damage to an electronic component and the like, in the control board of the hydraulic pressure control unit. Here, since the straddle-type vehicle has a limited mounted space for a device, it is desired to suppress enlargement of the hydraulic pressure control unit, which is caused by a mechanism provided as a measure against the electrostatic discharge.

The present invention has been made with the above-described problem as the background and therefore obtains a hydraulic pressure control unit capable of suppressing enlargement of the hydraulic pressure control unit.

### Solution to Problem

A hydraulic pressure control unit according to the present invention is a hydraulic pressure control unit for a straddle-type vehicle and includes: a hydraulic pressure sensor that detects a hydraulic pressure of a brake fluid; a hydraulic pressure control mechanism for controlling the hydraulic pressure; a control board that controls operation of the hydraulic pressure control mechanism; and a base body to which the hydraulic pressure sensor and the hydraulic pressure control mechanism are attached. The control board is electrically connected to the base body via a terminal that is provided to the hydraulic pressure sensor. The hydraulic pressure sensor includes a sensor board that executes signal processing in the hydraulic pressure sensor, and a casing that accommodates the sensor board and is electrically connected to the sensor board. The control board is electrically connected to the base body via the terminal of the hydraulic pressure sensor, the sensor board, and the casing.

### Advantageous Effects of Invention

The hydraulic pressure control unit according to the present invention is the hydraulic pressure control unit for the straddle-type vehicle and includes: the hydraulic pressure sensor that detects the hydraulic pressure of the brake fluid; the hydraulic pressure control mechanism for controlling the hydraulic pressure; the control board that controls the operation of the hydraulic pressure control mechanism; and the base body to which the hydraulic pressure sensor and the hydraulic pressure control mechanism are attached. The control board is electrically connected to the base body via the terminal that is provided to the hydraulic pressure sensor. The hydraulic pressure sensor includes a sensor board that executes signal processing in the hydraulic pressure sensor, and a casing that accommodates the sensor board and is electrically connected to the sensor board. The control board is electrically connected to the base body via the terminal of the hydraulic pressure sensor, the sensor board, and the casing. In this way, it is possible tc release static electricity, which is charged to the control board, to the base body via an energization path formed from the control board to the base body by using the hydraulic pressure sensor. Accordingly, a necessity to newly add a dedicated component as a measure against the electrostatic discharge is reduced. Therefore, it is possible to suppress enlargement of the hydraulic pressure control unit.

### Brief Description of Drawings

Fig. 1 is a schematic view illustrating an outline configuration of a straddle-type vehicle according to an embodiment of the present invention.
Fig. 2 is a schematic view illustrating an outline configuration of a brake system according to the embodiment of the present invention.
Fig. 3 is a perspective view illustrating external appearance of a hydraulic pressure control unit according to the embodiment of the present invention.
Fig. 4 is a cross-sectional view illustrating the hydraulic pressure control unit according to the embodiment of the present invention.
Fig. 5 is a schematic view illustrating an example of a static electricity passing circuit according to the embodiment of the present invention.
Fig. 6 is a schematic view illustrating an outline configuration of a hydraulic pressure control unit according to a modified embodiment.

### Description of Embodiments

A description will hereinafter be made on a hydraulic pressure control unit according to the present invention with reference to the drawings.

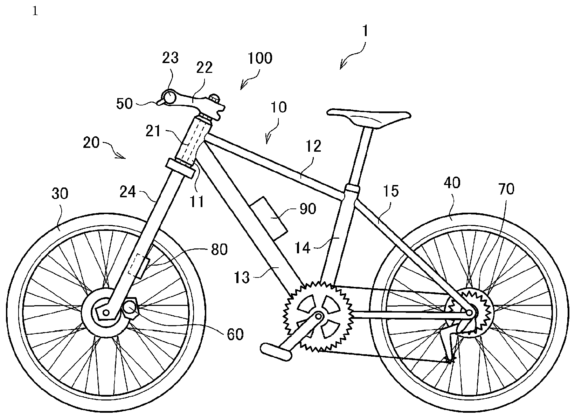

A description will hereinafter be made on a hydraulic pressure control unit used for a bicycle (see a straddle-type vehicle 1 in Fig. 1). However, the hydraulic pressure control unit according to the present invention may be used for a straddle-type vehicle other than the bicycle. The straddle-type vehicle means a vehicle that a rider straddles. Examples of the straddle-type vehicle are motorcycles (a two-wheeled motor vehicle and a three-wheeled motor vehicle), the bicycle, and an all-terrain vehicle. The motorcycles include a vehicle having an engine as a power source, a vehicle having an electric motor as a power source, and the like. Examples of the motorcycles are a motorbike, a scooter, and an electric scooter. The bicycle means a vehicle capable of traveling forward on a road by a depression force applied to pedals by the rider. Examples of the bicycle are a normal bicycle, an electrically-assisted bicycle, and an electric bicycle.

A description will hereinafter be made on an example in which the hydraulic pressure control unit only controls a braking force generated on a front wheel. However, the hydraulic pressure control unit according to the present invention may only control a braking force generated on a rear wheel or may control both of the braking force generated on the front wheel and the braking force generated on the rear wheel.

The same or similar description will appropriately be simplified or will not be made below. In the drawings, the same or similar members or portions will not be denoted by a reference sign or will be denoted by the same reference sign. A detailed structure will appropriately be illustrated in a simplified manner or will not be illustrated.

### <Configuration of Straddle-Type Vehicle>

A description will be made on an outline configuration of the straddle-type vehicle 1 according to an embodiment of the present invention with reference to Fig. 1.

Fig. 1 is a schematic view illustrating the outline configuration of the straddle-type vehicle 1. The straddle-type vehicle 1 is a bicycle that corresponds to an example of the straddle-type vehicle according to the present 30, a rear wheel 40, a braking operation section 50, a front-wheel braking section 60, a rear-wheel braking section 70, a hydraulic pressure control unit 80, and a power supply unit 90. The straddle-type vehicle 1 also includes a brake system 100 that includes some of these components.

For example, the frame 10 includes a head tube 11, a top tube 12, a down tube 13, a seat tube 14, and a stay 15. The head tube 11 axially supports a steering column 21 of the turning section 20, which will be described below. The top tube 12 and the down tube 13 are each coupled to the head tube 11. The seat tube 14 suspends between the top tube 12 and the down tube 13 and holds a saddle. The stay 15 is coupled to upper and lower ends of the seat tube 14 and holds the rear wheel 40 and the rear-wheel braking section 70. The rear-wheel braking section 70 is attached to the rear wheel 40 and applies a braking force to the rear wheel 40.

The turning section 20 includes the steering column 21, a handlebar stem 22, a handlebar 23, and a front fork 24. In a state of being freely rotatable about the head tube 11, the steering column 21 is axially supported by the head tube 11. The handlebar stem 22 is held by the steering column 21. The handlebar 23 is held by the handlebar stem 22. The braking operation section 50 is attached to the handlebar 23. The front fork 24 is coupled to the steering column 21. The front wheel 30 is held in a freely rotatable manner by the front fork 24. The front-wheel braking section 60 is attached to the front wheel 30 and applies the braking force to the front wheel 30. The front fork 24 is provided to each side of the front wheel 30. One end of the front fork 24 is coupled to the steering column 21, and the other end of the front fork 24 is connected to a rotation center of the front wheel 30. That is, the front wheel 30 is held in the freely rotatable manner between the paired front forks 24. The front fork 24 may be a front fork with a suspension.

The braking operation section 50 includes: a mechanism that is used as an operation section of the front-wheel braking section 60; and a mechanism that is used as an operation section of the rear-wheel braking section 70. For example, the mechanism that is used as the operation section of the front-wheel braking section 60 is disposed on a right end side of the handlebar 23, and the mechanism that is used as the operation section of the rear-wheel braking section 70 is disposed on a left end side of the handlebar 23.

The hydraulic pressure control unit 80 is held by the front fork 24 of the turning section 20. The hydraulic pressure control unit 80 is a unit that controls a hydraulic pressure of a brake fluid in the front-wheel braking section 60. The rear-wheel braking section 70 may be a braking section of a type that generates the braking force by increasing the hydraulic pressure of the brake fluid, or may be a braking section of a type that mechanically generates the braking force (for example, a braking section of a type that generates the braking force by generating a tensile force to a wire, or the like).

The power supply unit 90 is a power supply that supplies electric power to the hydraulic pressure control unit 80. For example, the power supply unit 90 is attached to the down tube 13 of the frame 10. The power supply unit 90 may be a battery or may be a generator. Examples of the generator are: a generator that generates the electrical power by travel of the straddle-type vehicle 1 (for example, a hub dynamo that generates the electrical power by rotation of the front wheel 30 or the rear wheel 40, a generator that also serves as a drive source of the front wheel 30 or the rear wheel 40 and generates regenerative power, or the like) ; and a generator that generates the electric power by sunlight.

The brake system 100 for the straddle-type vehicle 1 includes the braking operation section 50 (more specifically, the mechanism that is used as the operation section of the front-wheel braking section 60), the front-wheel braking section 60, the hydraulic pressure control unit 80, and the power supply unit 90. The brake system 100 can execute anti-lock brake control by causing the hydraulic pressure control unit 80 to control the hydraulic pressure of the brake fluid in the front-wheel braking section 60.

### <Configuration of Brake System>

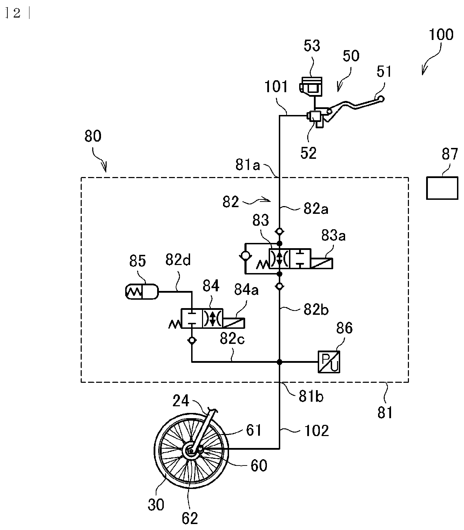

A description will be made on an outline configuration of the brake system 100 according to the embodiment of the present invention with reference to Fig. 2.

Fig. 2 is a schematic view illustrating the outline configuration of the brake system 100. As illustrated in Fig. 2, the hydraulic pressure control unit 80 includes a base body 81. The base body 81 is formed with a master cylinder port 81a, a wheel cylinder port 81b, and an internal channel 82 that communicates between the master cylinder port 81a and the wheel cylinder port 81b.

The internal channel 82 is a channel for the brake fluid. The internal channel 82 includes a first channel 82a, a second channel 82b, a third channel 82c, and a fourth channel 82d. The master cylinder port 81a and the wheel cylinder port 81b communicate with each other via the first channel 82a and the second channel 82b. An end portion on an inlet side of the third channel 82c is connected to an intermediate portion of the second channel 82b.

The braking operation section 50 (more specifically, the mechanism that is used as the operation section of the front-wheel braking section 60) is connected to the master cylinder port 81a via a fluid pipe 101. This braking operation section 50 includes a brake lever 51, a master cylinder 52, and a reservoir 53. The master cylinder 52 includes a piston section (not illustrated) that moves in an interlocking manner with the rider's operation using the brake lever 51, and is connected to an inlet side of the first channel 82a via the fluid pipe 101 and the master cylinder port 81a. In other words, the fluid pipe 101 that communicates with the master cylinder 52 is connected to the master cylinder port 81a. The hydraulic pressure of the brake fluid in the first channel 82a is increased or reduced by movement of the piston section in the master cylinder 52. The reservoir 53 stores the brake fluid for the master cylinder 52.

The front-wheel braking section 60 is connected to the wheel cylinder port 81b via a fluid pipe 102. The front-wheel braking section 60 includes a wheel cylinder 61 and a rotor 62. The wheel cylinder 61 is attached to a lower end portion of the front fork 24. The wheel cylinder 61 includes a piston section (not illustrated) that moves in an interlocking manner with a pressure in the fluid pipe 102, and is connected to an outlet side of the second channel 82b via the fluid pipe 102 and the wheel cylinder port 81b. In other words, the fluid pipe 102 that communicates with the wheel cylinder 61 is connected to the wheel cylinder port 81b. The rotor 62 is held by the front wheel 30 and rotates with the front wheel 30. When a brake pad (not illustrated) is pressed against the rotor 62 due to movement of the piston section in the wheel cylinder 61, the front wheel 30 brakes.

The hydraulic pressure control unit 80 also includes an inlet valve 83 and an outlet valve 84 for opening/closing the internal channel 82. The inlet valve 83 and the outlet valve 84 are attached to the base body 81. More specifically, the inlet valve 83 is provided between an outlet side of the first channel 82a and an inlet side of the second channel 82b and allows/disallows a flow of the brake fluid between the first channel 82a and the second channel 82b. The outlet valve 84 is provided between an outlet side of the third channel 82c and an inlet side of the fourth channel 82d and allows/disallows a flow of the brake fluid between the third channel 82c and the fourth channel 82d. The hydraulic pressure of the brake fluid is controlled by opening/closing operation of the inlet valve 83 and the outlet valve 84. In this embodiment, the brake system 100 is a brake system of a single system that executes the anti-lock brake control only for the braking force generated on the front wheel 30. Accordingly, in this embodiment, the base body 81 is provided with only one pair of the inlet valve 83 and the outlet valve 84.

The inlet valve 83 is provided with a first coil 83a as a drive source, and the outlet valve 84 is provided with a second coil 84a as a drive source. For example, when the first coil 83a is in an unenergized state, the inlet valve 83 allows a bidirectional flow of the brake fluid. Then, when the first coil 83a is energized, the inlet valve 83 is brought into a closed state and blocks the flow of the brake fluid. That is, in this embodiment, the inlet valve 83 is an electromagnetic valve that is opened when not being energized. Meanwhile, for example, when the second coil 84a is in the unenergized state, the outlet valve 84 blocks the flow of the brake fluid. Then, when the second coil 84a is energized, the outlet valve 84 is brought into an open state and allows the bidirectional flow of the brake fluid. That is, in this embodiment, the outlet valve 84 is an electromagnetic valve that is closed when not being energized.

The hydraulic pressure control unit 80 includes an accumulator 85. The accumulator 85 is connected to an outlet side of the fourth channel 82d and stores the brake fluid that has flowed through the outlet valve 84.

The hydraulic pressure control unit 80 includes a hydraulic pressure sensor 86 that detects the hydraulic pressure of the brake fluid. The hydraulic pressure sensor 86 is attached to the base body 81. In this embodiment, the hydraulic pressure sensor 86 detects the hydraulic pressure of the brake fluid in the wheel cylinder 61. The hydraulic pressure sensor 86 communicates with the second channel 82b.

The hydraulic pressure control unit 80 also includes a control board 87. The control board 87 includes an insulating section and a conductive section. The insulating section is a portion having a flat plate shape and not having conductivity. The conductive section is a portion having the conductivity and specifically includes: a conductive wire that is provided to the insulating section in the flat plate shape; and an electronic component mounted to the wire.

The control board 87 receives signals from various sensors such as the hydraulic pressure sensor 86 and a wheel rotational frequency sensor (not illustrated) for detecting a rotational frequency of the front wheel 30. The control board 87 is electrically connected to the first coil 83a and the second coil 84a and controls the energization of the first coil 83a and the second coil 84a. In detail, by controlling the energization of the first coil 83a, the control board 87 controls driving (the opening/closing operation) of the inlet valve 83. In addition, by controlling the energization of the second coil 84a, the control board 87 controls driving (the opening/closing operation) of the outlet valve 84. That is, by controlling the opening/closing operation of the inlet valve 83 and the outlet valve 84, the control board 87 controls the hydraulic pressure of the brake fluid in the wheel cylinder 61 and thereby controls the braking force on the front wheel 30.

For example, in the case where the control board 87 determines, from the signal of the wheel rotational frequency sensor (not illustrated), that the front wheel 30 is locked or possibly locked when the front wheel 30 brakes due to the rider's operation of the brake lever 51, the control board 87 initiates the anti-lock brake control.

Once initiating the anti-lock brake control, the control board 87 brings the first coil 83a into the energized state to close the inlet valve 83 and blocks the flow of the brake fluid from the master cylinder 52 to the wheel cylinder 61, so as to suppress an increase in the hydraulic pressure of the brake fluid in the wheel cylinder 61. Meanwhile, the control board 87 brings the second coil 84a into the energized state to open the outlet valve 84 and allows the flow of the brake fluid from the wheel cylinder 61 to the accumulator 85, so as to reduce the hydraulic pressure of the brake fluid in the wheel cylinder 61. In this way, locking of the front wheel 30 is canceled or avoided. In the case where the control board 87 determines, from the signal of the hydraulic pressure sensor 86, that the hydraulic pressure of the brake fluid in the wheel cylinder 61 has been reduced to a specified value, the control board 87 brings the second coil 84a into the unenergized state to close the outlet valve 84, and brings the first coil 83a into the unenergized state to open the inlet valve 83 for a short period, so as to increase the hydraulic pressure of the brake fluid in the wheel cylinder 61. The control board 87 may increase/reduce the hydraulic pressure of the brake fluid in the wheel cylinder 61 only once or may repeatedly increase/reduce the hydraulic pressure of the brake fluid in the wheel cylinder 61 for plural times.

When the anti-lock brake control is terminated and the brake lever 51 returns to an original position, the inside of the master cylinder 52 is brought into an atmospheric pressure state, and the brake fluid in the wheel cylinder 61 returns to the master cylinder 52. In addition, when the anti-lock brake control is terminated and the brake lever 51 returns to the original position, the outlet valve 84 is brought into the open state. When the hydraulic pressure of the brake fluid in the internal channel 82 becomes lower than the hydraulic pressure of the brake fluid stored in the accumulator 85, the brake fluid stored in the accumulator 85 is discharged to the outside of the accumulator 85 without the increase in the pressure thereof (that is, in a pumpless manner). Then, the brake fluid that has been discharged to the outside of the accumulator 85 sequentially flows through the fourth channel 82d, the outlet valve 84, the third channel 82c, the second channel 82b, the inlet valve 83, and the first channel 82a, then flows through the master cylinder port 81a and the fluid pipe 101, and returns to the master cylinder 52. That is, in the hydraulic pressure control unit 80 according to this embodiment, the accumulator 85 stores the brake fluid that is released from the wheel cylinder 61 during depressurization in the anti-lock brake control, and the brake fluid in the accumulator 85 is discharged to the outside of the accumulator 85 in the pumpless manner. Meanwhile, in the internal channel 82, the brake fluid in the accumulator 85 always returns to the master cylinder port 81a via the outlet valve 84.

### <Configuration of Hydraulic Pressure Control Unit>

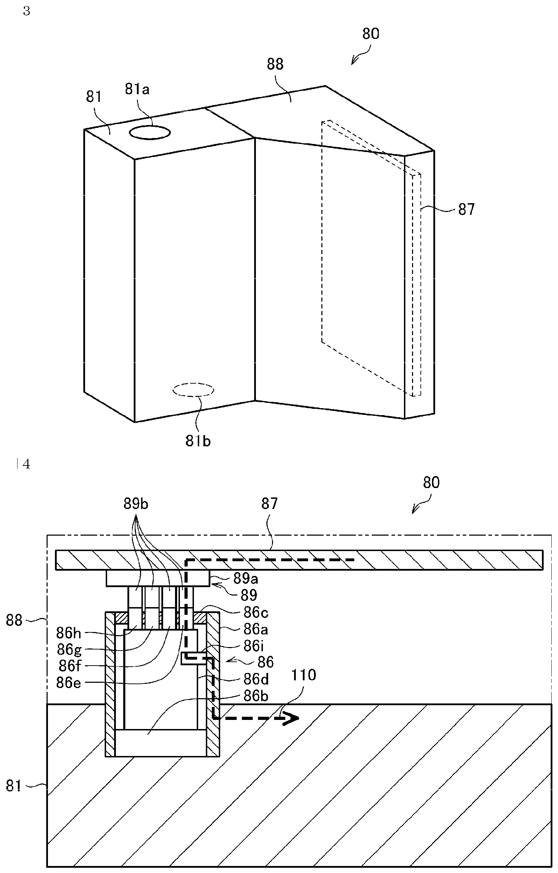

A further detailed description will be made on a configuration of the hydraulic pressure control unit 80 according to the embodiment of the present invention with reference to Fig. 3 to Fig. 6.

Fig. 3 is a perspective view illustrating external appearance of the hydraulic pressure control unit 80. As illustrated in Fig. 3, the hydraulic pressure control unit 80 includes the base body 81 and a case 88. The base body 81 is formed of a metal material (for example, an aluminum alloy) and has a substantially rectangular-parallelepiped shape, for example. The case 88 is formed of a resin material and has a hollow box shape with an opening. The case 88 is attached to the base body 81 by a bolt or the like such that the opening of the case 88 is closed by the base body 81. The shapes of the base body 81 and the case 88 are not limited to the examples illustrated in Fig. 3. For example, each surface of the base body 81 may be flat, may include a curved portion, or may include a step. In addition, for example, in the example illustrated in Fig. 3, one surface (a surface on a near side in Fig. 3) of the case 88 is inclined with respect to a surface, which is adjacent to the one surface, of the base body 81. However, the one surface may extend to be flush with the surface of the base body 81.

As described above, the hydraulic pressure control unit 80 includes a hydraulic pressure control mechanism for controlling the hydraulic pressure of the brake fluid. The hydraulic pressure control mechanisms include the inlet valve 83, the outlet valve 84, and the accumulator 85. These hydraulic pressure control mechanisms are attached to the base body 81. The above-described hydraulic pressure sensor 86 is also attached to the base body 81.

As described above, the hydraulic pressure control unit 80 includes the control board 87. The control board 87 is accommodated in the case 88. More specifically, the control board 87 is accommodated in a space that is defined by the base body 81 and the case 88. As described above, the control board 87 controls operation of the hydraulic pressure control mechanisms (more specifically, the inlet valve 83 and the outlet valve 84).

Fig. 4 is a cross-sectional view illustrating the hydraulic pressure control unit 80. More specifically, Fig. 4 is a cross-sectional view illustrating a cross section that includes a center axis of the hydraulic pressure sensor 86. Hereinafter, an upper side and a lower side in Fig. 4 will also simply be referred to as an upper side and a lower side, respectively. In the example illustrated in Fig. 4, the hydraulic pressure sensor 86 has a substantially columnar shape that extends in an up-down direction. For example, a lower portion of the hydraulic pressure sensor 86 (more specifically, a lower portion of a casing 86a, which will be described below) is press-inserted in the base body 81. The control board 87 is arranged above the hydraulic pressure sensor 86. As will be described below, the hydraulic pressure sensor 86 is electrically connected to the control board 87. A lower surface of the control board 87 opposes an upper surface of the base body 81.

As illustrated in Fig. 4, the hydraulic pressure sensor 86 includes the casing 86a, a detection section 86b, a lid section 86c, a sensor board 86d, terminals 86e, 86f, 86g, 86h, and a conductive member 86i.

The casing 86a is formed of the metal material and has a substantially cylindrical shape, for example. An opening on a lower side of the casing 86a is closed by the detection section 86b. The detection section 86b detects the hydraulic pressure of the brake fluid in the internal channel 82 of the base body 81. An opening on an upper side of the casing 86a is closed by the lid section 86c. The lid section 86c is formed of the resin material and has a substantially disc shape, for example.

The sensor board 86d is accommodated in the casing 86a. More specifically, the sensor board 86d is accommodated in a space that is defined by the casing 86a, the detection section 86b, and the lid section 86c. The sensor board 86d executes signal processing in the hydraulic pressure sensor 86. More specifically, the sensor board 86d executes various types of the signal processing on the signals detected by the detection section 86b, and generates information used by the control board 87. Similar to the control board 87, the sensor board 86d includes an insulating section (that is, a portion having a flat plate shape and not having the conductivity) and a conductive section (that is, a portion including: a conductive wire that is provided to the insulating section in the flat plate shape; and an electronic component mounted to the wire).

The terminals 86e, 86f, 86g, 86h are attached to an upper end of the sensor board 86d. The terminals 86e, 86f, 86g, 86h each penetrate the lid section 86c in the up-down direction. The terminals are separated from each other via the lid section 86c and are insulated from each other. As will be described below, the terminals 86e, 86f, 86g, 86h are each electrically connected to the control board 87 via a connection member 89. In this way, the sensor board 86d and the control board 87 can exchange the signal and electricity therebetween.

As will be described below, the terminal 86e is a terminal as a measure against electrostatic discharge. The terminal 86f is a ground terminal. The terminal 86g is a sensor signal input/output terminal. The terminal 86h is a power supply terminal. Each of a circuit that is formed by the sensor board 86d and the control board 87 via the sensor signal input/output terminal 86g and a circuit that is formed by the sensor board 86d and the control board 87 via the power supply terminal 86h is formed as a closed circuit by the ground terminal 86f, and a reference electric potential is set therefor.

In order to facilitate understanding, Fig. 4 illustrates the example in which the four terminals 86e, 86f, 86g, 86h are aligned in a right-left direction. However, the number and the arrangement of the terminals provided to the hydraulic pressure sensor 86 are not limited to those in the example illustrated in Fig. 4. For example, the four terminals 86e, 86f, 86g, 86h may be aligned in a circumferential direction of the hydraulic pressure sensor 86. For example, in addition to the four terminals 86e, 86f, 86g, 86h, a terminal for another application may be added to the hydraulic pressure sensor 86.

The connection member 89 electrically connects the control board 87 and the terminals 86e, 86f, 86g, 86h of the hydraulic pressure sensor 86. As illustrated in Fig. 4, the connection member 89 includes a base section 89a and an abutment section 89b. The base section 89a is attached to the lower surface of the control board 87 by soldering or the like, and has a substantially flat plate shape, for example. The base section 89a is provided with four abutment sections 89b. Each of the abutment sections 89b can move relative to the base section 89a in the up-down direction. Each of the abutment sections 89b is urged by and abuts each terminal of the hydraulic pressure sensor 86. More specifically, each of the abutment sections 89b is a pin that extends in the up-down direction and has the conductivity. Each of the abutment sections 89b is urged downward by an urging member (not illustrated) such as a spring. In this way, a lower end of each of the abutment sections 89b abuts an upper end of each terminal of the hydraulic pressure sensor 86. The abutment sections 89b are insulated from each other. Each of the terminals of the hydraulic pressure sensor 86 is electrically connected to one of the mutually different conductive sections (that is, the mutually different wires) of the control board 87 via each abutment section 89b.

Here, in the hydraulic pressure sensor 86 of the hydraulic pressure control unit 80, the casing 86a and the sensor board 86d are electrically connected via the conductive member 86i. The conductive member 86i is formed of the metal material and has the conductivity. More specifically, the conductive member 86i is electrically connected to the conductive section, which is electrically connected to the terminal 86e as the measure against the electrostatic discharge, of the conductive sections of the sensor board 86d. Accordingly, the terminal 86e as the measure against the electrostatic discharge is electrically connected to the casing 86a via the sensor board 86d and the conductive member 86i. Meanwhile, the terminals 86f, 86g, 86h other than the terminal 86e as the measure against the electrostatic discharge are not electrically connected to the casing 86a.

As described above, in the hydraulic pressure sensor 86 of the hydraulic pressure control unit 80, the terminal 86e as the measure against the electrostatic discharge is electrically connected to the casing 86a. Then, since the lower portion of the casing 86a is press-inserted in the base body 81, the casing 86a is electrically connected to the base body 81. Accordingly, the control board 87 (more specifically, the conductive section of the control board 87) is electrically connected to the base body 81 via the terminal 86e that is provided to the hydraulic pressure sensor 86. More specifically, the control board 87 is electrically connected to the base body 81 via the terminal 86e of the hydraulic pressure sensor 86, the sensor board 86d, and the casing 86a. In this way, an energization path 110 is formed from the control board 87 to the base body 81.

The energization path 110 is a path through which the electricity flows from the control board 87 toward the base body 81. By forming such an energization path 110, when the control board 87 is charged with static electricity, the static electricity in the control board 87 is released to the base body 81 through the energization path 110. In this way, it is possible to suppress the electrostatic discharge by effectively using the hydraulic pressure sensor 86 without newly adding a dedicated component as the measure against the electrostatic discharge. Therefore, it is possible to suppress enlargement of the hydraulic pressure control unit 80. Furthermore, since an increase in the number of components can also be suppressed, it is also possible to suppress a cost increase of the hydraulic pressure control unit 80.

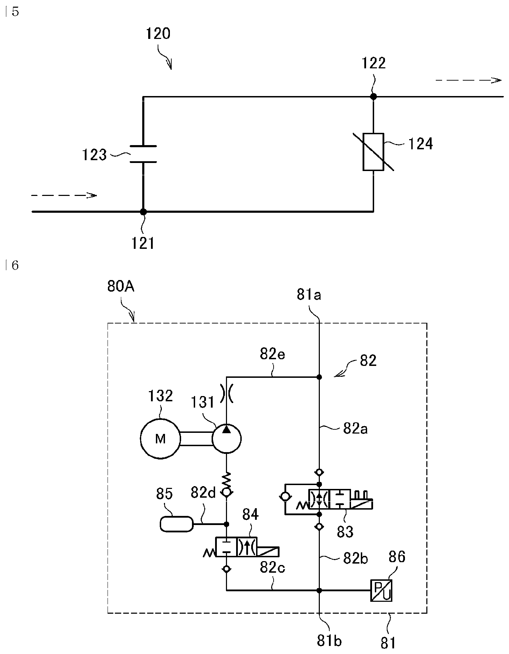

Here, from a perspective of further effectively suppressing the electrostatic discharge, the energization path 110 is preferably provided with a static electricity passing circuit 120 (see Fig. 5) for causing the static electricity to effectively pass therethrough. Fig. 5 is a schematic view illustrating an example of the static electricity passing circuit 120. In Fig. 5, a flow direction of the static electricity is indicated by broken arrows. In the example illustrated in Fig. 5, the static electricity passing circuit 120 includes: a contact point 121 on an upstream side in the flow direction of the static electricity; and a contact point 122 on a downstream side in the flow direction. As illustrated in Fig. 5, for example, a capacitor 123 and a Zener diode 124 are connected in parallel between the contact point 121 and the contact point 122. In such a static electricity passing circuit 120, electrical resistance is reduced as an applied voltage is increased. In particular, when the applied voltage exceeds a reference voltage that is defined according to a specification of the circuit, the electrical resistance is rapidly reduced. Accordingly, in the case where the higher voltage than the reference voltage is applied in the static electricity passing circuit 120, a flow of a current is promoted in comparison with a case where a voltage lower than the reference voltage is applied therein.

For example, the static electricity passing circuit 120 is provided to the control board 87. In this case, more specifically, the static electricity passing circuit 120 is provided to the conductive section, which is electrically connected to the terminal 86e as the measure against the electrostatic discharge of the conductive sections of the sensor board 86d. However, the static electricity passing circuit 120 may be provided to the sensor board 86d of the hydraulic pressure sensor 86. In this case, more specifically, the static electricity passing circuit 120 is provided to the conductive section, which is electrically connected to the terminal 86e as the measure against the electrostatic discharge, of the conductive sections of the sensor board 86d.

The above description has been made on the example in which the hydraulic pressure control unit 80 is provided with the inlet valve 83, the outlet valve 84, and the accumulator 85 as the hydraulic pressure control mechanisms. However, the hydraulic pressure control mechanisms provided to the hydraulic pressure control unit 80 are not limited to the above examples. Fig. 6 is a schematic view illustrating an outline configuration of a hydraulic pressure control unit 80A according to a modified embodiment. The hydraulic pressure control unit 80A mainly differs from the above-described hydraulic pressure control unit 80 in a point that a pump 131 and a motor 132 are added as the hydraulic pressure control mechanisms.

Compared to the above-described hydraulic pressure control unit 80, a fifth channel 82e is added to the internal channel 82 of the hydraulic pressure control unit 80A. The fifth channel 82e communicates between the fourth channel 82d and the first channel 82a. Such a fifth channel 82e is provided with the pump 131 for controlling the hydraulic pressure of the brake fluid. The motor 132 is provided as a drive source of the pump 131 and drives the pump 131. The pump 131 discharges the brake fluid from the fourth channel 82d side toward the first channel 82a side. In the hydraulic pressure control unit 80A, during the anti-lock brake control, the motor 132 drives the pump 131 to reduce the hydraulic pressure of the brake fluid. In this way, the brake fluid that has flowed into the accumulator 85 returns to the first channel 82a via the fifth channel 82e. As described above, the present invention may be applied to the hydraulic pressure control unit 80A that includes the pump 131 and the motor 132 as the hydraulic pressure control mechanisms.

The above description has been made on the example in which the control board 87 is electrically connected to the base body 81 via the terminal 86e of the hydraulic pressure sensor 86, the sensor board 86d, and the casing 86a. However, the control board 87 only needs to be electrically connected to the base body 81 via the terminal 86e, which is provided to the hydraulic pressure sensor 86. Thus, the energization path 110 is not limited to the above example. For example, the terminal 86e of the hydraulic pressure sensor 86 may directly and electrically be connected to the casing 86a without the sensor board 86d being interposed therebetween.

### <Effects of Hydraulic Pressure Control Unit>

A description will be made on effects of the hydraulic pressure control unit 80 according to the embodiment of the present invention.

The hydraulic pressure control unit 80 includes: the hydraulic pressure sensor 86 that detects the hydraulic pressure of the brake fluid; the hydraulic pressure control mechanisms (the inlet valve 83 and the outlet valve 84 in the above example) for controlling the hydraulic pressure; the control board 87 that controls the operation of the hydraulic pressure control mechanisms; and the base body 81 to which the hydraulic pressure sensor 86 and the hydraulic pressure control mechanisms are attached. In the hydraulic pressure control unit 80, the control board 87 is electrically connected to the base body 81 via the terminal 86e that is provided to the hydraulic pressure sensor 86. In this way, it is possible to release the static electricity, which is charged to the control board 87, to the base body 81 via the energization path 110, which is formed from the control board 87 to the base body 81 by using the hydraulic pressure sensor 86. Accordingly, the necessity to newly add the dedicated component as the measure against the electrostatic discharge is reduced. Therefore, it is possible to suppress the enlargement of the hydraulic pressure control unit 80. Furthermore, since the increase in the number of the components can be suppressed, it is also possible to suppress the cost increase of the hydraulic pressure control unit 80.

Preferably, in the hydraulic pressure control unit 80, the connection member 89, which electrically connects the control board 87 and the terminal 86e of the hydraulic pressure sensor 86, is attached to the control board 87, and the connection member 89 includes the abutment section 89b, which is urged by and abuts the terminal 86e of the hydraulic pressure sensor 86. In this way, the control board 87 can be easily assembled to the base body 81, to which the hydraulic pressure sensor 86 is assembled. Therefore, assemblability of the hydraulic pressure control unit 80 is improved. Meanwhile, in the case where the control board 87 and the hydraulic pressure sensor 86 are fixed to each other, a connected portion between the control board 87 and the hydraulic pressure sensor 86 is possibly fractured due to vibration generated to the hydraulic pressure control unit 80, or the like. However, such a fracture can be suppressed by electrically connecting the control board 87 and the hydraulic pressure sensor 86 via the connection member 89 described above.

Preferably, in the hydraulic pressure control unit 80, the hydraulic pressure sensor 86 includes: the sensor board 86d that executes the signal processing in the hydraulic pressure sensor 86; and the casing 86a that accommodates the sensor board 86d and is electrically connected to the sensor board 86d, and the control board 87 is electrically connected to the base body 81 via the terminal 86e of the hydraulic pressure sensor 86, the sensor board 86d, and the casing 86a. In this way, the energization path 110 is appropriately formed from the control board 87 to the base body 81. In addition, even when the sensor board 86d is charged with the static electricity, the static electricity, which is charged to the sensor board 86d, can be released to the base body 81 via the energization path 110.

Preferably, in the hydraulic pressure control unit 80, the energization path 110, which is formed from the control board 87 to the base body 81, is provided with the static electricity passing circuit 120. In the case where the higher voltage than the reference voltage is applied in the static electricity passing circuit 120, the flow of the current is promoted in comparison with the case where the voltage lower than the reference voltage is applied therein. In this way, it is possible to further effectively release the static electricity, which is charged to the control board 87, to the base body 81 via the energization path 110, which is formed from the control board 87 to the base body 81. Therefore, it is possible to further effectively suppress the electrostatic discharge.

Preferably, in the hydraulic pressure control unit 80, the static electricity passing circuit 120 is provided to the control board 87. Here, the static electricity passing circuit 120 may be provided to the sensor board 86d. However, since the sensor board 86d is smaller than the control board 87, a degree of freedom in layout of the circuit is low. Therefore, by providing the static electricity passing circuit 120 to the control board 87, it is possible to further effectively suppress the electrostatic discharge while the degree of freedom in the layout of the circuit is secured for each of the circuits.

Preferably, in the hydraulic pressure control unit 80, the hydraulic pressure sensor 86 includes, in addition to the terminal 86e, the ground terminal 86f that is electrically connected to the control board 87. In this way, the static electricity is suppressed from flowing into the circuit that is formed by the sensor board 86d and the control board 87 via the sensor signal input/output terminal 86g and the circuit that is formed by the sensor board 86d and the control board 87 via the power supply terminal 86h. Therefore, it is possible to suppress damage to the electronic components of these circuits.

Preferably, in the hydraulic pressure control unit 80, the hydraulic pressure control mechanisms include the valves (in the above example, the inlet valve 83 and the outlet the case where the hydraulic pressure control unit 80 is mounted to the bicycle, it is possible to suppress the enlargement and the cost increase of the hydraulic pressure control unit 80.

Preferably, in the hydraulic pressure control unit 80, the straddle-type vehicle 1 is the motorcycle. In this way, in the case where the hydraulic pressure control unit 80 is mounted to the motorcycle, it is possible to suppress the enlargement and the cost increase of the hydraulic pressure control unit 80.

- 1:: Straddle-type vehicle
- 10:: Frame
- 11:: Head tube
- 12:: Top tube
- 13:: Down tube
- 14:: Seat tube
- 15:: Stay
- 20:: Turning section
mounted to the motorcycle, it is possible to suppress the enlargement and the cost increase of the hydraulic pressure control unit 80.

The present invention is not limited to the embodiment that has been described. For example, only a part of the embodiment may be implemented.

### Reference Signs List

- 1:: Straddle-type vehicle
- 10:: Frame
- 11:: Head tube
- 12:: Top tube
- 13:: Down tube
- 14:: Seat tube
- 15:: Stay
- 20:: Turning section
- 21:: Steering column
- 22:: Handlebar stem
- 23:: Handlebar
- 24:: Front fork
- 30:: Front wheel
- 40:: Rear wheel
- 50:: Braking operation section
- 51:: Brake lever
- 52:: Master cylinder
- 53:: Reservoir
- 60:: Front-wheel braking section
- 61:: Wheel cylinder
- 62:: Rotor
- 70:: Rear-wheel braking section
- 80:: Hydraulic pressure control unit
- 80A:: Hydraulic pressure control unit
- 81:: Base body
- 81a:: Master cylinder port
- 81b:: Wheel cylinder port
- 82:: Internal channel
- 82a:: First channel
- 82b:: Second channel
- 82c:: Third channel
- 82d:: Fourth channel
- 82e:: Fifth channel
- 83:: Inlet valve
- 83a:: First coil
- 84:: Outlet valve
- 84a:: Second coil
- 85:: Accumulator
- 86:: Hydraulic pressure sensor
- 86a:: Casing
- 86b:: Detecting section
- 86c:: Lid section
- 86d:: Sensor board
- 86e:: Terminal
- 86f:: Terminal
- 86g:: Terminal
- 86h:: Terminal
- 86i:: Conductive member
- 87:: Control board
- 88:: Case
- 89:: Connection member
- 89a:: Base section
- 89b:: Abutment section
- 90:: Power supply unit
- 100:: Brake system
- 101:: Fluid pipe
- 102:: Fluid pipe
- 110:: Energization path
- 120:: Static electricity passing circuit
- 121:: Contact point
- 122:: Contact point
- 123:: Capacitor
- 124:: Zener diode
- 131:: Pump
- 132:: Motor

## Claims

1. A hydraulic pressure control unit (80) for a straddle-type vehicle (1), the hydraulic pressure control unit (80) comprising:
a hydraulic pressure sensor (86) for detecting a hydraulic pressure of a brake fluid;
a hydraulic pressure control mechanism (83, 84, 131, 132) for controlling the hydraulic pressure;
a control board (87) that controls operation of the hydraulic pressure control mechanism (83, 84, 131, 132); and
a base body (81) to which the hydraulic pressure sensor (86) and the hydraulic pressure control mechanism (83, 84, 131, 132) are attached,
**characterized in that**:
the control board (87) is electrically connected to the base body (81) via a terminal (86e) that is provided to the hydraulic pressure sensor (86), and
the hydraulic pressure sensor (86) includes:
a sensor board (86d) that executes signal processing in the hydraulic pressure sensor (86);
a casing (86a) that accommodates the sensor board (86d) and is electrically connected to the sensor board (86d), and
the control board (87) is electrically connected to the base body (81) via the terminal (86e) of the hydraulic pressure sensor (86), the sensor board (86d), and the casing (86a).

2. The hydraulic pressure control unit (80) according to claim 1, wherein
a connecting member (89) that electrically connects the control board (87) and the terminal (86e) of the hydraulic pressure sensor (86) is attached to the control board (87), and the connection member (89) includes an abutment section (89b) that is urged by and abuts the terminal (86e) of the hydraulic pressure sensor (86).

3. The hydraulic pressure control unit (80) according to any one of claims 1 to 2, further comprising:
an energization path (110) formed from the control board (87) to the base body (81), provided with a static electricity passing circuit (120), and in the case where a higher voltage than a reference voltage is applied in the static electricity passing circuit (120), the energization path (110) is configured to provide a flow of a current.

4. The hydraulic pressure control unit (80) according to claim 3, wherein
the static electricity passing circuit (120) is provided on the control board (87).

5. The hydraulic pressure control unit (80) according to any one of claim 1 to 4, wherein
the hydraulic pressure sensor (86) includes, in addition to the terminal (86e), a ground terminal (86f) that is electrically connected to the control board (87).

6. The hydraulic pressure control unit (80) according to any one of claims 1 to 5, wherein the hydraulic pressure control mechanism (83, 84, 131, 132) includes a valve (83, 84) for controlling the hydraulic pressure.

7. The hydraulic pressure control unit (80) according to any one of claims 1 to 6, wherein
the hydraulic pressure control mechanism (83, 84, 131, 132) includes a pump (131) for controlling the hydraulic pressure and a motor (132) for driving the pump (131).

8. A bicycle, comprising a hydraulic pressure control unit (80) according to any one of claims 1 to 7.

9. A motorcycle, comprising a hydraulic pressure control unit (80) according to any one of claims 1 to 7.

## Patentansprüche

1. Hydraulikdrucksteuereinheit (80) für ein Spreizsitz-Fahrzeug (1), wobei die Hydraulikdrucksteuereinheit (80) Folgendes umfasst:
einen Hydraulikdrucksensor (86) zum Erfassen eines Hydraulikdrucks einer Bremsflüssigkeit;
einen Hydraulikdrucksteuermechanismus (83, 84, 131, 132) zum Steuern des Hydraulikdrucks;
eine Steuerplatine (87), die den Betrieb des Hydraulikdrucksteuermechanismus (83, 84, 131, 132) steuert; und
einen Grundkörper (81), an dem der Hydraulikdrucksensor (86) und der Hydraulikdrucksteuermechanismus (83, 84, 131, 132) befestigt sind,
**dadurch gekennzeichnet, dass**:
die Steuerplatine (87) über einen an dem Hydraulikdrucksensor (86) vorgesehenen Anschluss (86e) elektrisch mit dem Grundkörper (81) verbunden ist, und der Hydraulikdrucksensor (86) Folgendes umfasst:
eine Sensorplatine (86d), die die Signalverarbeitung im Hydraulikdrucksensor (86) ausführt; ein Gehäuse (86a), das die Sensorplatine (86d) aufnimmt und elektrisch mit der Sensorplatine (86d) verbunden ist, und
die Steuerplatine (87) über den Anschluss (86e) des Hydraulikdrucksensors (86), die Sensorplatine (86d) und das Gehäuse (86a) elektrisch mit dem Grundkörper (81) verbunden ist.

2. Hydraulikdrucksteuereinheit (80) nach Anspruch 1, wobei
ein Verbindungselement (89), das die Steuerplatine (87) und den Anschluss (86e) des Hydraulikdrucksensors (86) elektrisch verbindet, an der Steuerplatine (87) angebracht ist, und das Verbindungselement (89) einen Anlageabschnitt (89b) umfasst, der durch den Anschluss (86e) des Hydraulikdrucksensors (86) beaufschlagt wird und an diesem anliegt.

3. Hydraulikdrucksteuereinheit (80) nach einem der Ansprüche 1 bis 2, ferner umfassend:
einen von der Steuerplatine (87) zum Grundkörper (81) ausgebildeten Strompfad (110), der mit einer Schaltung zur Ableitung statischer Elektrizität (120) versehen ist, wobei im Fall, dass in der Schaltung zur Ableitung statischer Elektrizität (120) eine höhere Spannung als eine Referenzspannung anliegt, der Strompfad (110) dazu ausgelegt ist, einen Stromfluss bereitzustellen.

4. Hydraulikdrucksteuereinheit (80) nach Anspruch 3, wobei
die Schaltung zur Ableitung statischer Elektrizität (120) auf der Steuerplatine (87) vorgesehen ist.

5. Hydraulikdrucksteuereinheit (80) nach einem der Ansprüche 1 bis 4, wobei
der Hydraulikdrucksensor (86) zusätzlich zu dem Anschluss (86e) einen Masseanschluss (86f) umfasst, der elektrisch mit der Steuerplatine (87) verbunden ist.

6. Hydraulikdrucksteuereinheit (80) nach einem der Ansprüche 1 bis 5, wobei
der Hydraulikdrucksteuermechanismus (83, 84, 131, 132) ein Ventil (83, 84) zur Steuerung des Hydraulikdrucks umfasst.

7. Hydraulikdrucksteuereinheit (80) nach einem der Ansprüche 1 bis 6, wobei
der Hydraulikdrucksteuermechanismus (83, 84, 131, 132) eine Pumpe (131) zur Steuerung des Hydraulikdrucks und einen Motor (132) zum Antrieb der Pumpe (131) umfasst.

8. Fahrrad, umfassend eine Hydraulikdrucksteuereinheit (80) nach einem der Ansprüche 1 bis 7.

9. Motorrad, umfassend eine Hydraulikdrucksteuereinheit (80) nach einem der Ansprüche 1 bis 7.

## Revendications

1. Unité de commande de pression hydraulique (80) pour véhicule à selle (1), l'unité de commande de pression hydraulique (80) comprenant :
un capteur de pression hydraulique (86) pour détecter une pression hydraulique d'un liquide de frein ;
un mécanisme de commande de pression hydraulique (83, 84, 131, 132) pour commander la pression hydraulique ;
une carte de commande (87) qui commande le fonctionnement du mécanisme de commande de pression hydraulique (83, 84, 131, 132) ; et
un corps de base (81) auquel sont fixés le capteur de pression hydraulique (86) et le mécanisme de commande de pression hydraulique (83, 84, 131, 132),
**caractérisée en ce que** :
la carte de commande (87) est reliée électriquement au corps de base (81) par l'intermédiaire d'une borne (86e) qui est située sur le capteur de pression hydraulique (86), et
le capteur de pression hydraulique (86) comprend :
une carte de capteur (86d) qui exécute un traitement de signal dans le capteur de pression hydraulique (86) ; un boîtier (86a) qui accueille la carte de capteur (86d) et est connecté électriquement à la carte de capteur (86d), et
la carte de commande (87) est connectée électriquement au corps de base (81) par l'intermédiaire de la borne (86e) du capteur de pression hydraulique (86), de la carte de capteur (86d) et du boîtier (86a).

2. Unité de commande de pression hydraulique (80) selon la revendication 1,
un élément de connexion (89) qui connecte électriquement la carte de commande (87) et la borne (86e) du capteur de pression hydraulique (86) étant fixé à la carte de commande (87), et l'élément de connexion (89) comprenant une section de butée (89b) qui est poussée par la borne (86e) du capteur de pression hydraulique (86) et vient en butée contre celle-ci.

3. Unité de commande de pression hydraulique (80) selon l'une quelconque des revendications 1 à 2, comprenant en outre :
un trajet d'excitation (110) formé de la carte de commande (87) au corps de base (81), pourvu d'un circuit de passage d'électricité statique (120), et dans le cas où une tension supérieure à une tension de référence est appliquée dans le circuit de passage d'électricité statique (120), le trajet d'excitation (110) est configuré pour fournir un flux de courant.

4. Unité de commande de pression hydraulique (80) selon la revendication 3,
le circuit de passage d'électricité statique (120) est situé sur la carte de commande (87).

5. Unité de commande de pression hydraulique (80) selon l'une quelconque des revendications 1 à 4,
le capteur de pression hydraulique (86) comprenant, en plus de la borne (86e), une borne de masse (86f) qui est connectée électriquement à la carte de commande (87).

6. Unité de commande de pression hydraulique (80) selon l'une quelconque des revendications 1 à 5,
le mécanisme de commande de pression hydraulique (83, 84, 131, 132) comprenant une soupape (83, 84) pour commander la pression hydraulique.

7. Unité de commande de pression hydraulique (80) selon l'une quelconque des revendications 1 à 6,
le mécanisme de commande de pression hydraulique (83, 84, 131, 132) comprenant une pompe (131) pour commander la pression hydraulique et un moteur (132) pour entraîner la pompe (131).

8. Bicyclette, comprenant une unité de commande de pression hydraulique (80) selon l'une quelconque des revendications 1 à 7.

9. Motocyclette, comprenant une unité de commande de pression hydraulique (80) selon l'une quelconque des revendications 1 à 7.
